Europäisches Patentamt

European Patent Office

Office européen des brevets

(11) Veröffentlichungsnummer: **0 028 350**
A1

(12) # EUROPÄISCHE PATENTANMELDUNG

(21) Anmeldenummer: 80106406.4

(22) Anmeldetag: 21.10.80

(51) Int. Cl.³: **B 60 C 7/12**
**B 29 H 11/00**

(30) Priorität: 02.11.79 DE 2944345

(43) Veröffentlichungstag der Anmeldung:
13.05.81 Patentblatt 81 19

(84) Benannte Vertragsstaaten:
AT BE CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Ippen, Jakob, Dr.
Schleiermacherstrasse 17
D-5090 Leverkusen(DE)

(72) Erfinder: Stüttgen, Friedel
Albrecht-Dürer-Strasse 94
D-5024 Pulheim(DE)

(54) **Gummifederreifen und Verfahren zu seiner Herstellung.**

(57) Pannensicherer Gummifederreifen, bestehend aus einem durchgehenden Reifenfuß, einer mit Profileinschnitten (10) versehenen Lauffläche und einem federnden Verbindungsteil, das gebildet wird durch beidseitig gleichmäßig über den Reifenumfang verteilte, in der Äquatorzone befindliche, einander abwechselnde sinusförmige Einbuchtungen (14) und axiale Aushöhlungen (13), die auf den gegenüberliegenden Seiten des Reifens in Laufrichtung jeweils gegeneinander versetzt sind.

FIG.1 (A-A)

EP 0 028 350 A1

BAYER AKTIENGESELLSCHAFT     509  Leverkusen, Bayerwerk

Zentralbereich
Patente, Marken und Lizenzen      Kb/Krö

Gummifederreifen und Verfahren zu seiner Herstellung

Die vorliegende Erfindung betrifft einen Gummifederreifen, der auf üblichen Felgen montiert werden kann, sowie ein Verfahren zur Herstellung dieses Reifens.

Das tragende Element von herkömmlichen luftgefüllten Reifen ist die Karkasse. Sie besteht aus vulkanisiertem Kautschuk und ist als Hohlkörper in Form eines Torus ausgebildet, der mit Luft, die unter Überdruck steht, gefüllt ist. Werden solche Reifen undicht, so verlieren sie ihren Innendruck und damit ihre Form und werden beim Abrollen in kürzester Zeit zerstört.
Massive Reifen, in denen keine Druckluft als Federungselement enthalten ist (Vollgummireifen), haben diesen Nachteil nicht und sind daher pannensicher. Sie besitzen jedoch eine sehr große Masse, so daß sich beim Abrollen ein Hitzestau bildet, der zur Zerstörung des Reifenmaterials führt.

Le A 20 028

- 2 -                                    0028350

Es ist daher schon vorgeschlagen worden, durch geeignete Aushöhlungen des Reifenkörpers dessen Masse soweit zu reduzieren, daß die erforderlichen Federeigenschaften noch gewährleistet sind und eine ausreichende Kühlung während des Laufs erreicht wird. Aus den DE-OS 24 60 050 und 24 60 051 sind derartige zweigeteilte bzw. einteilige Reifen bekannt. Sie müssen allerdings auf speziellen mehrteiligen Felgen montiert werden.

Aufgabe der Erfindung ist es, einen pannensicheren Reifen bereitzustellen, der auf herkömmlichen Felgen montiert werden kann und ausreichende Tragkraft und Federeigenschaften und gleichzeitig eine so geringe Masse besitzt, daß ein Hitzestau vermieden wird.

Die Aufgabe wird erfindungsgemäß dadurch gelöst, daß in der Äquatorzone des Reifens aufeinanderfolgende sinusförmige Einbuchtungen und axiale Aushöhlungen vorhanden sind, durch deren Form und Anordnung ein federndes Verbindungsteil zwischen Lauffläche und Fuß geschaffen und die Reifenmasse genügend verringert wird, um eine ausreichende Kühlung während des Laufs zu erreichen.

Gegenstand der Erfindung ist ein Gummifederreifen, bestehend aus einem durchgehenden Reifenfuß, einer mit Profileinschnitten versehenen Lauffläche und einem federnden Verbindungsteil, das gebildet wird durch beidseitig gleichmäßig über den Reifenumfang verteilte, in der Äquatorzone befindliche, einander abwechselnde sinusförmige Einbuchtungen und axiale Aushöhlungen, die auf den gegenüberliegenden Seiten des Reifens in Laufrichtung jeweils gegeneinander versetzt sind.

Le A 20 028

Die Zahl der Einbuchtungen bzw. Aushöhlungen beträgt pro Reifenseite 10-100, vorzugsweise 12-40. Ihre Höhe beträgt 45-55%, vorzugsweise etwa 50% der Reifenhöhe, wobei sich die Höhe der axialen Aushöhlungen zur Reifenmitte hin auf etwa 25-35% oder weniger der Reifenhöhe verringert. Die Tiefe der Einbuchtungen beträgt 8-12%, vorzugsweise etwa 10% der Reifenbreite. Die Tiefe der Aushöhlungen beträgt weniger als 50%, vorzugsweise etwa 40-45% der Reifenbreite.

Die Lauffläche des Reifens kann im Prinzip jede bekannte Profilgestaltung aufweisen. Vorzugsweise besitzt die Lauffläche jedoch konische, axiale, in Laufrichtung aufeinanderfolgende Profileinschnitte unterschiedlicher Größe. Ihre Tiefe liegt zwischen 30 und 55% der Reifenbreite, ihre Höhe zwischen 5 und 15% der Reifenhöhe und das Verhältnis von Tiefe zu mittlerer Breite der Profileinschnitte beträgt 15:1 bis 3:1. Bei einer der verschiedenen Ausführungsformen des Reifens ist es auch möglich, die jeweils größten Profileinschnitte von der Lauffläche über die Reifenschultern soweit nach unten zu führen, daß sie in die sinusförmigen Einbuchtungen in der Äquatorzone übergehen.

Der Reifen besitzt einen durchgehenden, auf der Felge aufsitzenden Fuß, der parallel zur Felgenschräge verläuft. Der Reifenfuß kann in an sich bekannter Weise durch umlaufende Metalleinlagen, z. B. durch Drahtkerne verstärkt sein, um den Halt des Reifens auf der Felge zu verbessern. Vorzugsweise ist der Reifenfuß durch zwei durchgehende, parallel zur Felgenschräge verlaufende Metallbänder verstärkt, die durch 6-10, bevorzugt durch 8 Zwischenstege aus Metall in gleich-

Le A 20 028

mäßigen Abständen miteinander verbunden sind.

Der gesamte Reifen hat ein Verhältnis von Höhe zu Breite von 0,5:1 bis 1,25:1, vorzugsweise von 0,9:1 bis 1,1:1. Sein Gewicht liegt lediglich etwa 30-50% über dem eines vergleichbaren luftgefüllten Reifens. Der erfindungsgemäße Reifen hat unter anderem den Vorteil, daß er auf den üblichen mehrteiligen Normfelgen montiert werden kann, wie sie für die herkömmlichen Luft- und Vollgummireifen, z. B. bei Industriefahrzeugen verwendet werden.

Ein weiterer Vorteil des Reifens besteht darin, daß zu seiner Herstellung nur ein Arbeitsgang und einfache Transferformen erforderlich sind. So kann der Reifen als Spritzkörper im Transferverfahren hergestellt werden. Außer den gegebenenfalls vorhandenen Drahtringen im Reifenfuß sind keine Verstärkungselemente erforderlich. Zur Herstellung ist jeder beliebige Natur- und Synthesekautschuk geeignet, dessen Vulkanisate eine Shore-Härte von 65-90 und einen Spannungswert von 110-200 $kp/cm^2$ bei 300% Dehnung aufweisen. Besonders geeignet sind Naturkautschuk, Styrolbutadienkautschuk, Ethylen-Propylen-Terpolymerisat-Kautschuk und Polybutadien.

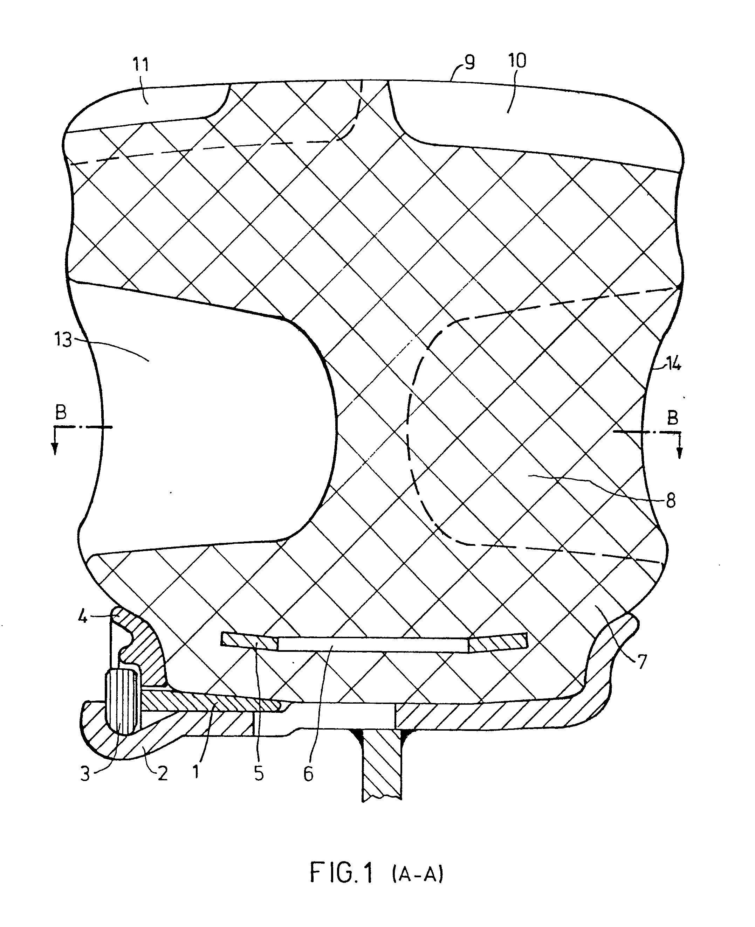

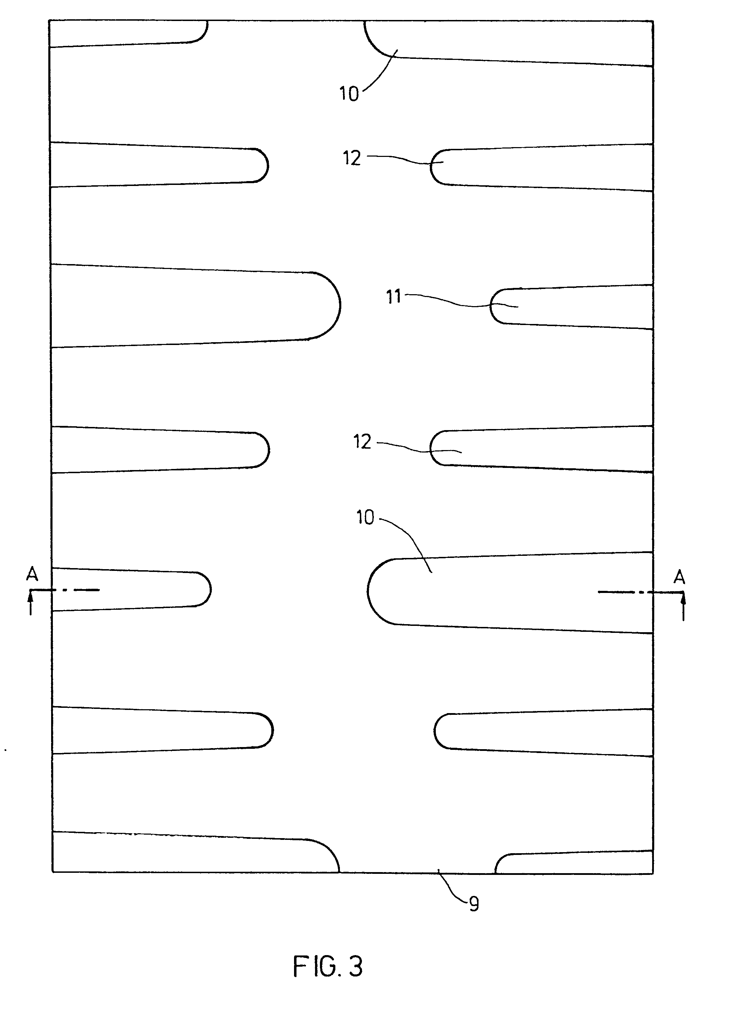

In Figur 1 ist ein Reifen gemäß vorliegender Erfindung im Querschnitt wiedergegeben (entsprechend Schnitt A-A in Figur 3). Der auf einer herkömmlichen Felge, bestehend aus den Teilen (1), (2), (3) und (4), montierte Reifen besteht aus der Lauffläche (9), dem Reifenfuß (7) und dem federnden Verbindungsteil (8). Die axiale Aushöhlung (13) und die sinusförmige Einbuchtung (14) liegen in der Äquatorzone des Reifens und haben in der hier gezeigten Ausführungsform eine größte Höhe von 50% der gesamten Reifen-

Le A 20 028

höhe un eine Tiefe von 43% (13) bzw. 10% (14) der gesamten Reifenbreite. Durch die Form und Anordnung von (13) und (14) wird die Masse des Reifens ausreichend verringert und die Form des Verbindungsteils (8) so gestaltet, daß es die erforderlichen Federeigenschaften besitzt. In der Lauffläche (9)sind axiale Profileinschnitte vorhanden, von denen hier zwei (10, 11) wiedergegeben sind. Der Reifenfuß (7) ist durch zwei umlaufende Drahtringe (5) verstärkt, die über acht in gleichmäßigen Abständen angeordnete Zwischenstege (6) miteinander verbunden sind.

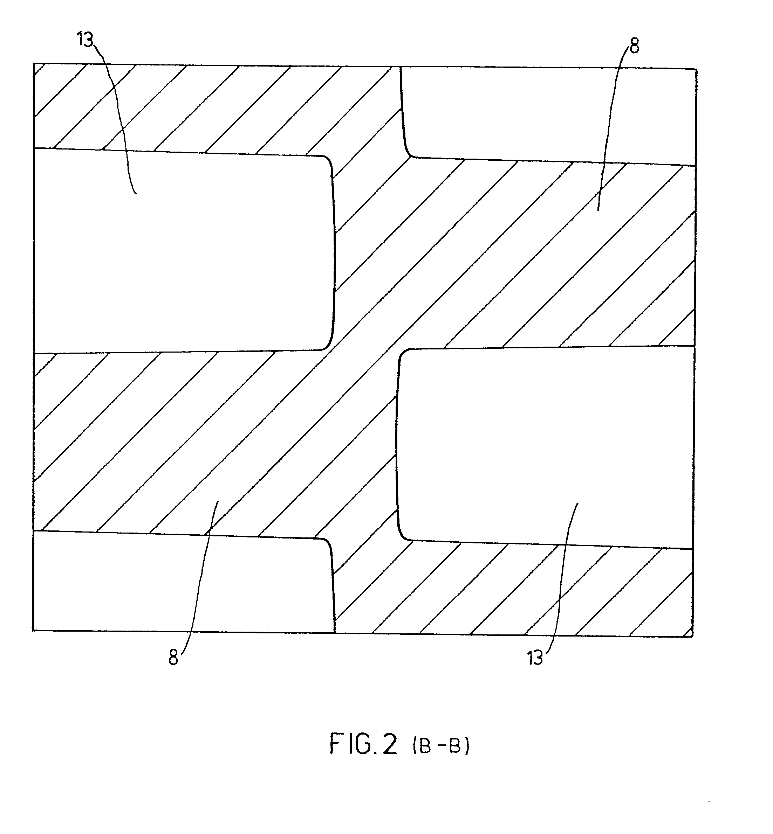

Figur 2 ist ein Schnitt durch die Äquatorzone des Reifens (entsprechend B-B in Figur 1) und zeigt die auf beiden Seiten des Reifens vorhandenen, in Laufrichtung gegeneinander versetzten axialen Aushöhlungen (13) und das zwischen Lauffläche und Reifenfuß verbleibende federnde Verbindungsteil (8) im Schnitt.

Figur 3 zeigt eine Aufsicht auf die Lauffläche (9) mit bevorzugter Profilgestaltung, die aus unterschiedlich großen, konischen axialen Profileinschnitten (10,11,12) gebildet wird. Hierbei liegen sich ein großer (10) und ein kleiner (11) bzw. zwei mittelgroße Profilanschnitte (12) jeweils gegenüber. In der folgenden Tabelle sind die bevorzugten Maße der Profilausschnitte aufgeführt; in Klammern ist jeweils die besonders bevorzugte, in Figur 3 wiedergegebene Größe angegeben.

# T a b e l l e

| Profil-einschnitt | Tiefe (in % der Reifenbreite) | mittl. Breite(in % der Reifenbreite) | Höhe (in % der Reifenhöhe) |
|---|---|---|---|
| 10 | 45-50 (47,3) | 10-15 (12) | 8-12 (10) |
| 11 | 25-30 (26) | 5-10 ( 6) | 4- 7 (5,3) |
| 12 | 35-40 (36) | 5-10 ( 6) | 4- 7 (5,3) |

Le A 20 028

- 6 -

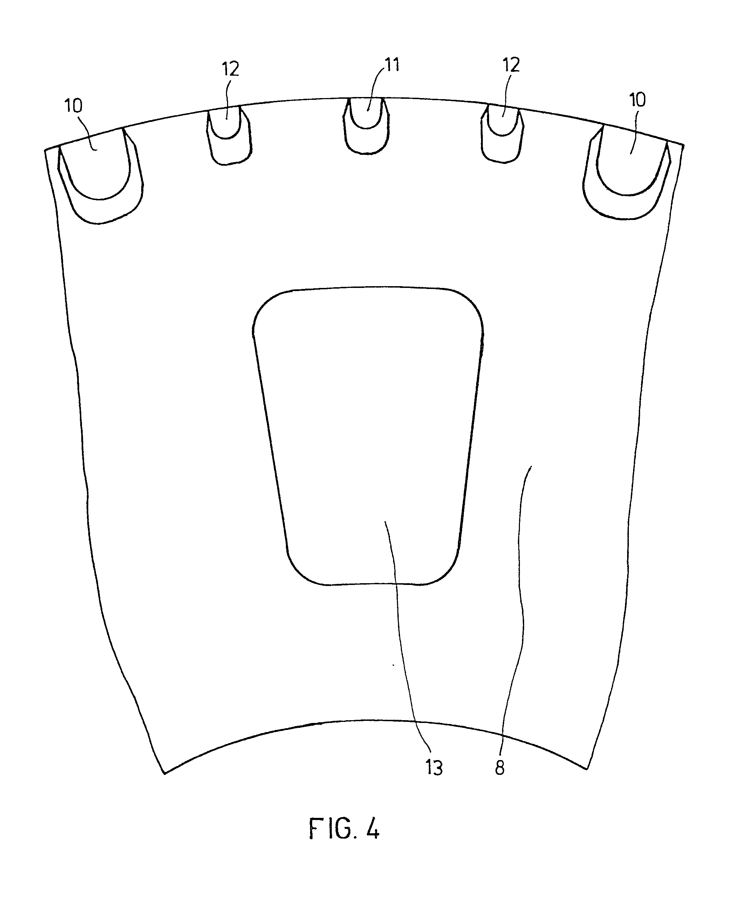

Figur 4 zeigt einen Ausschnitt aus der Seitenansicht des Reifens, in der die Profileinschnitte (10,11,12), die axialen Aushöhlungen (13) und das federnde Verbindungsteil (8) wiedergegeben sind.

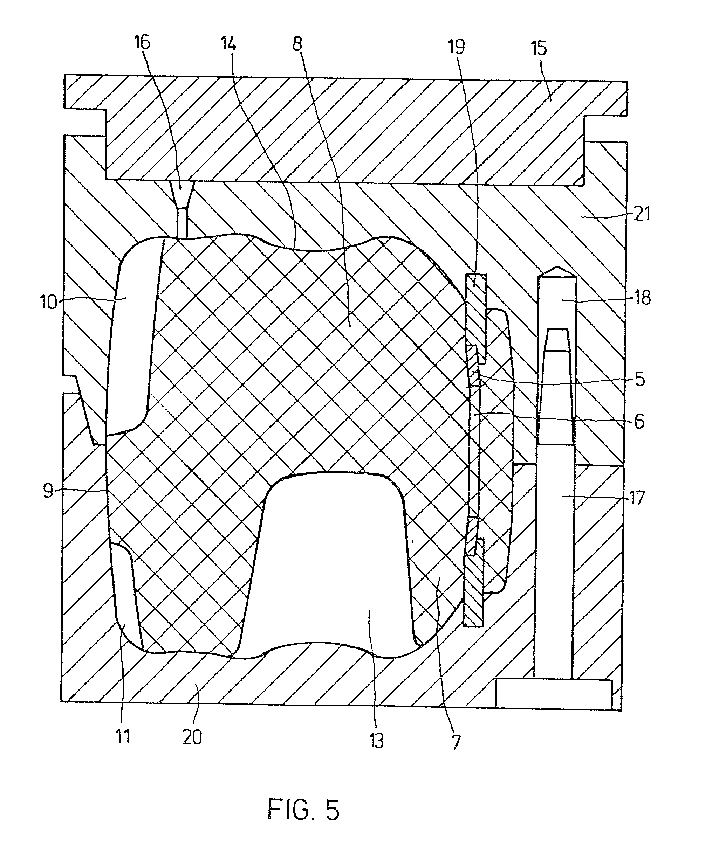

Figur 5 erläutert die Herstellung des Reifens als Spritzkörper im Transverfahren und zeigt einen Schnitt durch die Transferform in geschlossenem Zustand nach beendetem Einspritzvorgang. Entsprechend Figur 1 ist vom Reifen wiedergegeben: Lauffläche (9) mit Profileinschnitten (10,11), federndes Verbindungsteil (8) mit axialer Aushöhlung (13) und sinusförmiger Einbuchtung (14) und Reifenfuß (7) mit zwei verstärkenden Drahtkernen (5) und Zwischensteg (6). Letztere werden durch Kernhalter (19), die in der Formunterseite (20) und der Formoberseite (21) verankert sind, in ihrer Position fixiert. In der Regel werden 6-8 Kernhalter pro Formseite verwendet. Die Formoberseite (21) wird gegen die Unterseite (20) durch vier am Umfang verteilte Führungsbohrungen (18) über Zentrierstifte (17) positioniert. Zur Herstellung des Reifens wird die eingelegte Kautschukmischung durch den Einspritzkolben (15) unter einem Druck von 100 bis 150 kg/cm$^2$ über den Spritzkanal (16) in den Hohlraum der Form eingespritzt.

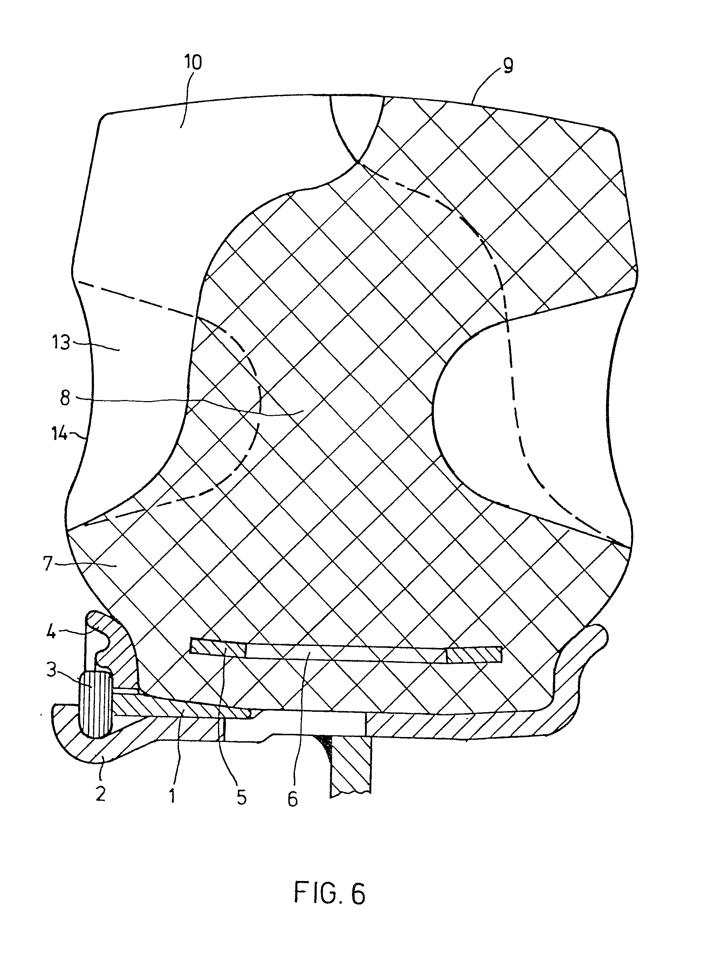

Figur 6 zeigt einen Querschnitt durch eine andere Ausführungsform des Reifens (Bezifferung wie in Figur 1). Die Tiefe der axialen Aushöhlung (13) beträgt hier lediglich etwa 30-40% der Reifenbreite. Die großen Profileinschnitte (10) sind dagegen einerseits in der Lauffläche (9) bis über die Reifenmitte hinausgeführt und verlaufen andererseits soweit nach unten,
daß sie in die sinusförmigen Einbuchtungen (14)
übergehen. Das federnde Verbindungsteil (8) erhält
dadurch die in Figur 6 wiedergegebene Form, in der
es in seinem in die Lauffläche übergehenden Teil abwechselnd zur einen oder anderen Reifenseite hin
orientiert ist.

Beispiel

Die Herstellung von Reifen gemäß vorliegender Erfindung erfolgt in einer ringförmigen Transferform wie
in Figur 5 dargestellt.

In die untere Muldenhälfte der Form wird zunächst
der mit Zwischenstegen (6) versehene doppelte Drahtring (5) eingelegt und mit dem Kernhalter fixiert.
In die obere Muldenhälfte wird eine vulkanisierbare
Kautschukmischung eingebracht. Dann wird die Form geschlossen und der Kolben (15) unter Druck gesetzt. Nach
dem Schließen der Presse heizt man die Form auf und
vulkanisiert 12-15 Minuten bei etwa 175°C. Danach
kann der fertige Reifen entnommen werden.

Zur Reifenherstellung werden die im folgenden beschriebenen Kautschukmischungen verwendet. Die für die Zusammensetzung angegebenen Zahlen sind Gewichtsteile.

Le A 20 028

Mischung 1
_____

Zusammensetzung:

| | |
|---|---|
| Naturkautschuk | 25,0 |
| Styrol-Butadien-Copolymerisat | 25,0 |
| cis-1,4-Polybutadien | 50,0 |
| Ruß N 330 | 80,0 |
| Harz | 4,0 |
| Stearinsäure | 2,0 |
| N-Isopropoyl-N'-phenyl-p-phenylendiamin | 2,5 |
| 2,2,4-Trimethyl-1,2-dihydrochinolin, polym. | 1,5 |
| Zinkoxid | 5,0 |
| Benzothiazyl-2-cyclohexylsulfenamid | 1,2 |
| Unlöslicher Schwefel | 2,66 |
| | 198,86 |

Eigenschaften:

| | |
|---|---|
| Mischungsplastizität / 80°C Defo-Härte/Defo-Elastizität | 7700/17 |
| Zugfestigkeit (kp/cm$^2$) | 199 |
| Bruchdehnung (%) | 310 |
| Spannungswert bei 300 % Dehnung (kp/cm$^2$) | 191 |
| Weiterreißfestigkeit nach Pohle (kp/4 mm) | 16 |
| Härte (Shore A) bei 20°C | 82 |

Le A 20 028

Mischung 2

Zusammensetzung:

| | |
|---|---|
| Naturkautschuk | 80,0 |
| cis-1,4-Polybutadien | 20,0 |
| Ruß N-330 | 55,0 |
| Aromatisches Mineralöl | 3,0 |
| Stearinsäure | 2,5 |
| Ozonschutzwachs | 1,0 |
| N-Isopropyl-N'-phenyl-p-phenylendiamin | 2,5 |
| 2,2,4-Trimethyl-1,2-dihydrochinolin, polym. | 1,5 |
| Zinkoxid | 5,0 |
| Benzothiazyl-2-sulfenmorpholid | 1,2 |
| Unlöslicher Schwefel | 1,9 |
| | 173,6 |

Eigenschaften:

| | |
|---|---|
| Mischungsplastizität / 80°C Defo-Härte / Defo-Elastizität | 1100/15 |
| Zugfestigkeit (kp/cm$^2$) | 219 |
| Bruchdehnung (%) | 460 |
| Spannungswert bei 300 % Dehnung (kp/cm$^2$) | 130· |
| Weiterreißfestigkeit nach Pohle (kp/4 mm) | 37 |
| Härte (Shore A) bei 20°C | 66 |

Le A 20 028

Mischung 3

Zusammensetzung:

| | |
|---|---|
| Ölverstrecktes Styrol-Butadien-Copolymerisat | 68,5 |
| Ölverstrecktes cis-1,4-Polybutadien | 68,5 |
| Ruß N-220 | 95,0 |
| Aromatisches Mineralöl | 20,0 |
| Harz | 2,0 |
| Stearinsäure | 2,0 |
| Ozonschutzwachs | 1,5 |
| N-Isopropyl-N'-phenyl-p-phenylendiamin | 2,5 |
| 2,2,4-Trimethyl-1,2-dihydrochinolin, polym. | 1,5 |
| Zinkoxid | 3,0 |
| Benzothiazyl-2-cyclohexylsulfenamid | 1,5 |
| Tetramethylthiurammonosulfid | 0,2 |
| Unlöslicher Schwefel | 2,4 |
| | 268,6 |

Eigenschaften:

| | |
|---|---|
| Mischungsplastizität / 80°C Defo-Härte / Defo-Elastizität | 1550/16 |
| Zugfestigkeit (kp/cm$^2$) | 155 |
| Bruchdehnung (%) | 410 |
| Spannungswert bei 300 % Dehnung (kp/cm$^2$) | 108 |
| Weiterreißfestigkeit nach Pohle (kp/4 mm) | 24 |
| Härte (Shore A) bei 20°C | 66 |

Le A 20 028

Patentansprüche

1. Gummifederreifen, bestehend aus einem durchgehenden Reifenfuß, einer mit Profileinschnitten versehenen Lauffläche und einem federnden Verbindungsteil, das gebildet wird durch beidseitig gleichmäßig über den Reifenumfang verteilte, in der Äquatorzone befindliche, einander abwechselnde sinusförmige Einbuchtungen und axiale Aushöhlungen, die auf den gegenüberliegenden Seiten des Reifens in Laufrichtung jeweils gegeneinander versetzt sind.

2. Reifen nach Anspruch 1, dadurch gekennzeichnet, daß das Verhältnis von Höhe zu Breite 0,5:1 bis 1,25:1 beträgt.

3. Reifen nach Anspruch 1 und 2, dadurch gekennzeichnet, daß die Höhe der Einbuchtungen bzw. Aushöhlungen 45-55% der gesamten Reifenhöhe beträgt.

4. Reifen nach Anspruch 1 bis 3, dadurch gekennzeichnet, daß die Lauffläche konische, axiale, in Laufrichtung aufeinander folgende Profileinschnitte unterschiedlicher Größe besitzt.

5. Reifen nach Anspruch 4, dadurch gekennzeichnet, daß sich der größte Profileinschnitt oberhalb der sinusförmigen Einbuchtung befindet.

6. Reifen nach Anspruch 5, dadurch gekennzeichnet, daß der Profileinschnitt soweit nach unten geführt wird, daß er in die sinusförmige Einbuchtung übergeht.

Le A 20 028

7. Verfahren zur Herstellung des Reifens nach Anspruch 1
   bis 6, dadurch gekennzeichnet, daß der Reifen als
   Spritzkörper im Transferverfahren hergestellt wird.

FIG.1 (A-A)

FIG. 2 (B-B)

FIG. 3

FIG. 4

FIG. 5

FIG. 6

**Europäisches Patentamt**

# EUROPÄISCHER RECHERCHENBERICHT

Nummer der Anmeldung

EP 80 10 6406

| | EINSCHLÄGIGE DOKUMENTE | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | B 60 C 7/12 |
| | US - A - 1 574 499 (T. MARSHALL) <br> * Seite 1, Zeilen 28-108; Figur IV * <br><br> -- | 1,2 | B 29 H 11/00 |
| | US - A - 1 467 172 (D. KENNEDY) <br> * Seite 1, Zeile 39 bis Seite 2, Zeile 15 * <br><br> -- | 1,4,5 | |
| | GB - A - 239 789 (F. GOLBY) <br> * Seite 1, Zeilen 22-80 * <br><br> -- | 1-3 | **RECHERCHIERTE SACHGEBIETE (Int. Cl.)** <br><br> B 60 C 7/12 |
| | GB - A - 247 859 (W. GILLAM) <br> * Seite 1, Zeile 10 - Seite 2, Zeile 20 * <br><br> -- | 1,2,4-6 | |
| D | FR - A - 2 294 866 (BAYER) <br> * Seite 1, Zeile 1 - Seite 2, Zeile 33; Figuren 1-3 * <br><br> -- | 7 | |
| A | US - A - 1 641 150 (W. BRUBAKER) | | |
| A | US - A - 1 616 843 (W. BRUBAKER) | | |
| A | US - A - 1 445 768 (E. HULSE) <br><br> ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 05-02-1981 | SCHMITT |

EPA form 1503.1   06.78